# EUROPEAN PATENT SPECIFICATION

(11) **EP 0 327 394 B1**
(45) Date of publication and mention of the grant of the patent: **20.12.1995**
(21) Application number: 89301094.2
(22) Date of filing: 03.02.1989
(51) Int. Cl.: B01D 25/26

(54) **Cell-type filter cartridge**
Ringscheiben-Filterpatrone
Cartouche filtrante du type cellulaire

(30) Priority: 03.02.1988 US 151853
(43) Date of publication of application: 09.08.1989
(60) Divisional application: 95201125.2
(73) Proprietor: Cuno Incorporated, Meriden Connecticut 06450 (US)
(72) Inventor: Artinyan, Arto, Southington Connecticut 06489 (US); Krzyston, John, Guilford Connecticut 06437 (US)
(74) Representative: Gillam, Francis Cyril

(56) References cited:
- EP-A- 0 166 465
- EP-A- 0 284 404
- DE-A- 3 712 872
- US-A- 2 088 199
- US-A- 4 221 663
- US-A- 4 347 208

## Description

The present invention relates to methods of forming filter cells and cartridges.

Cell-type filter cartridges have long been used and are being increasingly used in a variety of situations. Such filter cartridges are typically fabricated from individual cells generally having two layers of filter media separated from each other. Liquid typically flows from the outside of the filter medium towards the central portion of the cell. A significant advantage of cell-type filter cartridges is that the surface area of filter material is quite large when compared to the total volume of an assembled cell-type filter cartridge.

Disposed between each filter medium is a separator which is typically formed in the shape of disks having ribs radially extending from the central aperture in a spoke-like pattern. In addition to separating the two layers of filter media, it provides for fluid flow from the filter media towards the central aperture of the filter media. An excellent example of a filter separator may be found in U.S. Patent No. 4,783,262 to Ostreicher et al., entitled "Improved Separator for Cell Type Filter Cartridges", assigned to the same applicant as the present invention. The separator disk described therein has stiffening members formed at the central aperture of the cell, which members are attached to a plurality of separating ribs thereby to provide a rigid box-like structure sufficient to impart substantial cantilever strength to the ribs. Further, one of the stiffening members is positioned proximate the ends of the separator ribs in order to act as a load-bearing surface to prevent media intrusion of the filtering medium and to prevent blocking the area of the flow path with the filtered liquid. Accordingly, one distinct advantage in this type of separator is that during backwashing or reverse flow (i.e. fluid flow from the central aperture of the filter cell out towards the surface of the filter medium) damage to the filter media is minimised or ameliorated.

Filter cell cartridges use a variety of filter media for filtering many fluids. Examples of such media and uses may be found, for example, in U.S. Patent No. 4,617,128 "Particulate Filter Aid, Filter Bed and Process" dated October 14, 1986, to Ostreicher; 4,309,247 "Filter and Method of Making Same" dated January 5, 1982 to Hou et al.; 4,305,782 "Filter and Method of Making Same" dated December 15, 1981 Ostreicher et al.; 4,007,113 "Particulate Filter Medium and Process" dated February 8, 1977 to Ostreicher; and 4,007,114 "Fibrous Filter Medium and Process" dated February 8, 1977 to Ostreicher.

Use of a cell-type filter cartridge may be also found in United States Patent No. 4,361,486 "Filter Media, Method of Oxidizing and Removing Soluble Iron, Method for Removing Inactivating Micro-organisms and Particulate Filter Aid" issued November 30, 1982 to Hou et al.

A process for manufacturing filter cells is described in United States Patent No. 4,347,208 "Method of Making Filter Cell Having Sealed Periphery" issued August 31, 1982 to Southall. In this patent, a filter cell cartridge is described which comprises a plurality of filter cells. Each of the filter cells is comprised of filter media having a conical separator therebetween with the periphery or edges of the filter cell being held together and sealed by an injection-moulded flange.

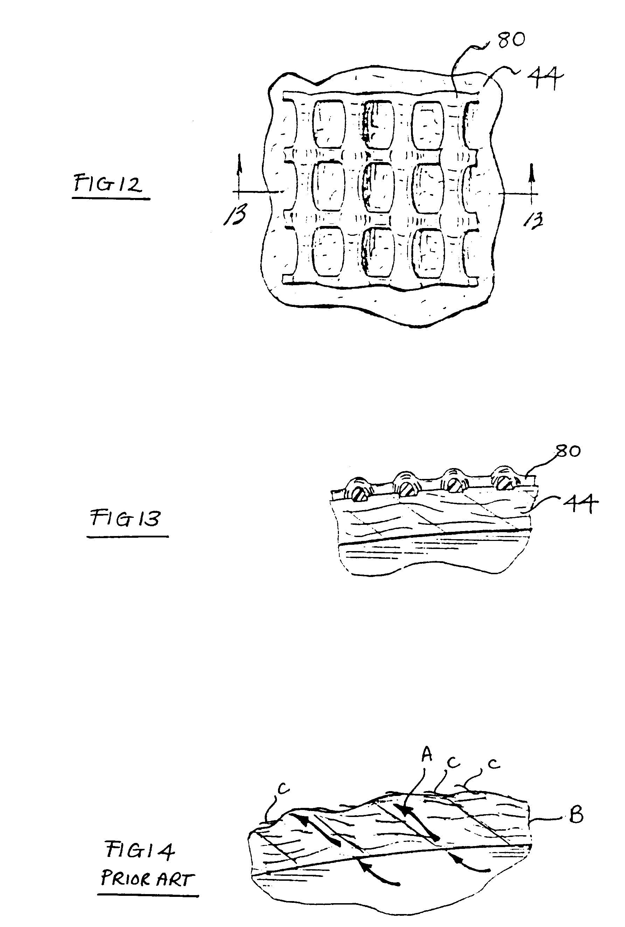

Generally, all of the aforedescribed filter cartridges perform satisfactorily for their intended purpose during normal operating conditions. However, due to the inherent labour and capital costs in replacing the filter cartridge, most applications utilise a backwash or reverse flow process in order to improve volumetric fluid flow therethrough and prolong the life of the cartridge. Obviously, the more backwashing operations that are permissible, the lower the total operating costs of the system. However, during backwashing operations, many filters, including filter cell-type cartridges, experience decreased tensile strength of the media, cracking of the edge seal, masking off of the media and/or flaking off of actual filter medium fibres. An illustration of this process is shown in Figure 14 herein (prior art) wherein fluid, designated A, backflowing through filter media B causes shredding or flaking of the cell medium and the production of frayed edges of particles C. Another problem with filter-cell type cartridges is that unintentional backpressure applied to the filter cell may cause cell rupture and/or distortion.

A number of attempts have been made throughout the years to strengthen filters and to control the flow of fluid therethrough by the use of lattice-type structures external to the actual filter medium. An early example of this may be found in United States Patent No. 445,223 entitled "Filter" issued January 27, 1891 to E.M. Knight. The Knight patent utilises a wire screen external to the filter media in order to prevent sagging of the filter media during use, the filter being partially held by the screen. The Knight patent found this feature important since the filter itself used a charcoal paste adjacent a fibrous covering and was hence "limp¨.

A second example may be found in United States Patent No. 2,249,063 entitled "filter Leaf" issued July 15, 1941 to Swem. This patent utilises a wire screen to provide structural support to the filter media under the high operating temperature and pressure utilised.

Another example may be found in United States Patent No. 2,263,853 entitled "Filter" issued 25th November, 1941 to Re Qua. This patent utilises a metal ribbon twisted about its longitudinal axis in order to support the filter media. Additionally, a supporting screen was utilised which is simultaneously welded at diametrically opposed points on the ribbon.

In the United States Patent No. 4,274,964 "Dialysator" issued June 23, 1981 to Krick et al. a membrane-type hose in conjunction with an intermediate netting layer is used in an interlocking manner for the purpose of providing an improved flow pattern.

Accordingly, the above mentioned patents use a support of one kind or another for the express purpose of providing a stiff filter support for the "limp" filter during use, i.e. the supports in effect form for filter elements which, by themselves, lack the appropriate physical properties. As such, the prior art braces or nets are used with filters specifically for the purpose of supporting the filter during forward fluid flow conditions as distinct from dealing with the problem of masking off, flaking off of actual filter media fibres, cracking at the edge seal and distortion caused by backwashing and backflow conditions and other related problems. In effect, the problem to be solved by the present invention is not one of the physical integrity during normal operation and use, but rather the reverse of maintaining physical integrity where fluid is flowing contrary to normal flow as during backwashing operations or unintentional backpressure.

In DE-3712872-A, there is described a filter construction wherein a plurality of sheets of filter media are overlaid with gaps therebetween, adjacent pairs of sheets of filter media being sealed together at their outer peripheries. A co-axial central aperture is formed through all of the sheets and alternate pairs of sheets are sealed together, whereby fluid externally of the filter may flow through the filter media to between the pairs of sheets and from there into the central aperture. The filter media from which each sheet is constructed comprises two perforate rigid sheets, one of which is of a corrugated form, between which extends a filter membrane, the perforate rigid sheets serving to support and locate the filter membrane.

In EP-0,284,404-A2, having priority and publication dates of 27.03.87 and 28.09.88 respectively, there is described a filter construction having filter segments each of which comprises a support disc with filter media lying on both sides of that disc. The disc has a central aperture, to permit a plurality of segments to be assembled together co-axially, with fluid flow taking place from within a chamber in which the segments are located, through the filter media and then along channels formed in the support disc to the central aperture. From there, filtered fluid is withdrawn from the filter assembly.

Though EP-0,284,404-A2 discloses the use of mesh to support the filter media when in use, there is no disclosure of how it is ensured the entire surface of the filter media is adequately covered by the mesh, whilst at the same time ensuring an area of the filter media is exposed for sealing purposes in the central region, around the aperture. EP-A-0 284 404 is not pertinent to the question of inventive step.

In order to overcome the difficulties encountered by the prior art, the broadest aspect of the present invention provides a method of forming a filter cell having an unfiltered fluid side and a central aperture into which fluid flows through the cell from the unfiltered side, in which method two sheets of filter media each having a central aperture are arranged on either side of and sealed to a separator disposed coaxially with said apertures in the media, the support being provided with openings to allow fluid to flow into the central region from between the two sheets of filter media, and there being peripheral sealing means joining together the outer peripheries of the media, wherein the unfiltered fluid sides of the two sheets of filter media are overlaid with netting means not detrimentally affecting the flow throughput in the cell, which netting means also has central apertures which are arranged concentrically with the apertures in the two sheets of filter media; and
the central apertures in the netting means are enlarged by removing a ring of the netting means concentric with the apertures in the filter media so as thereby to expose respective sealing surfaces on the filter media, around the central apertures therein.

Means may be provided for securing said netting means to said filter media, which securing means preferably comprises a circumferentially disposed retainer. This retainer may be moulded in place, preferably by an injection moulding process.

The securing means further may comprise a centrally disposed retaining disk on the outer surface of both of said filter media.

The moulded edge, which is preferably injection-moulded, resiliently engages and holds the netting means tightly to the exterior of the filter media, and also sealingly compresses together the outer peripheries of the two sheets of filter media, thereby forming a cell. In this way, cracking at the edge seals of the filter cell may be minimised. Also, the netting means does not detrimentally affect the fluid throughput in a cell.

A filter cell constructed by the method of this invention may have an improved aesthetic appearance, and is less likely to fail prematurely. The cell does not aesthetically indicate failure when, in effect, the filter as a whole is still serviceable. A filter cell assembly of this invention is less likely to blind or close itself off as readily as prior art devices and prior construction forms, i.e. there is a better utilisation of total surface area and extended life. Fluid flow may be directed across the exterior of the surface by parallel channels formed by the netting, thereby enhancing flow distribution and full utilisation of the filter surfaces.

A filter assembly may be made from at least two, but preferably more than two, filter cells disposed co-axially with respect to each other, each said filter cell being formed as described above and each sheet of filter medium having a centrally disposed aperture therethrough, a filtered fluid outlet being in fluid communication with the central apertures of the cells, retainer means being disposed along the mutual periphery of the two sheets of filter media of each cell for securing said netting means thereto, and ring means being centrally disposed adjacent said filtered fluid outlet for securing said netting means to said sheets of filter media.

In the case of the filter cell forming method of this invention, the netting means may be cut, so as to overlay one filtering surface of a sheet of filter medium, and so preferably have a circular configuration with a concentrically disposed central aperture. During a step of cutting the netting means, a frangible ring of netting means is preferably formed concentrically about the central aperture.

The outer periphery of the netting means may be aligned with the outer periphery of the sheets of filter media, advantageously by aligning the central aperture of the netting means with the central aperture of the filter media by placing the netting means and the sheets of filter media on a common axis.

The sheets of filter media and the netting means are secured together at the circumferential edges of the aligned netting means and filter media, preferably by moulding a holding member to secure the netting means to the filter media.

The method may include the additional step of placing a retaining ring assembly on the central aperture of the netting means. Further, the method may have the additional step of peeling the frangible ring.

By way of example only, one specific embodiment of this invention will now be described in detail, reference being made to the accompanying drawings, in which:
Figure 1 is a perspective view of the filter cell cartridge assembly of the present invention;
Figure 2 is a cross-sectional elevational view taken through Figure 1 along 2-2;
Figure 3 is an overview of the mesh-cutting guide utilised in the present invention;
Figure 4 is a cross-sectional view taken through one of the blades shown in Figure 3;
Figure 5 is an illustrative view of a cut netting blank as utilised in the present invention;
Figure 6 is a partially exploded view of the netting utilised in the present invention adjacent the filter portion of a filter cell;
Figure 7 is a side elevational view showing an assembly of the individual components comprising a filter cell;
Figures 8 and 9 are cross-sectional views illustrating injection-moulding and the mould respectively of the sealed periphery of an individual filter cell;
Figures 10 and 11 illustrate an assembled filter cell and assembly of a filter cell cartridge of the present invention;
Figures 12 and 13 illustrate a plan and cross-sectional view respectively of the netting and filter media utilised in the present invention; and
Figure 14 shows typical filter media of prior art filter cell cartridges.

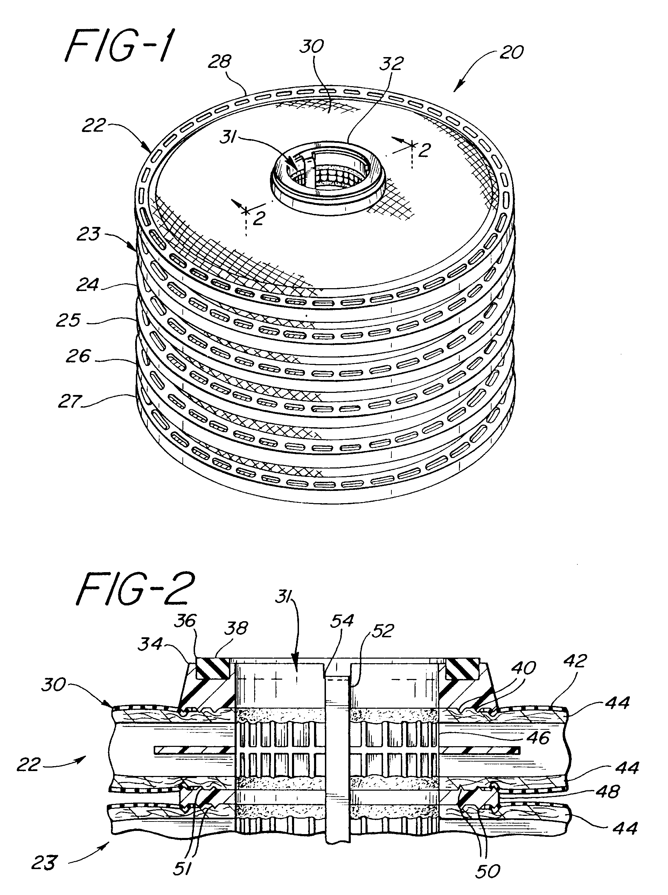

Referring now to Figure 1, there is shown a reinforced filter assembly 20 which is comprised of a plurality of cells 22-27, vertically stacked one upon the other. Disposed along the circumference of each filter cell is a moulded plastic edge 28 which is utilised to retain the various components of each individual cell together, as described more fully below. A relatively larger filtration area 30 is used for the introduction of unfiltered fluid (not shown) therethrough which exits through the centre aperture or core 31. Disposed at both ends of the assembly 20 is a retainer ring assembly 32. The entire filter assembly 20 is disposed inside a chamber (not shown) having an unfiltered inlet for the chamber and a filtered fluid outlet connected to one or both retainer ring assemblies 32.

Referring now to Figure 2, there is shown a cross-sectional view taken through a portion of the filter cell assembly shown in Figure 1. Retainer ring assembly 32 is comprised of an end fitting 34 having an annular slot 36 therein. Disposed in the annular slot 36 is a gasket 38 which coacts with an annular conduit (not shown) thereby preventing the migration of unfiltered fluid adjacent the filtration area 30 into the central aperture or core 31. A plurality of filter assemblies may be disposed inside a chamber in stacked relationship thereto, thereby allowing replacement of groups of filter assembles (not shown). A plurality of annular ribs 40 are disposed on the underside of end fitting 34 and provide a fluid-tight fitting between the end fitting 34 and the surface of the filtration area 30, while holding and retaining mesh 42 thereon. Optionally, the mesh 42 may be sealed, e.g. ultrasonically welded, to end fitting 34.

Still referring to Figure 2, filter cell 22,23 is comprised of netting 42 disposed on the outer surfaces thereof. The netting is preferably a mesh of the desired thickness and mesh size sufficient to withstand the forward and backward fluid flow requirements and provided for relatively undiminished fluid flow therethrough while preventing flaking and the like. Hence, this netting supplements, enhances or increases the tensile strength of the filter medium 44 when wet. Generally, any type of netting or mesh may be used which is pervious to flow. It is preferred however to use a polymeric mesh or netting, e.g. polypropylene. It is also preferred to have a rigidized netting or mesh which forms parallel fluid flow channels tangential to the media. A filter material separator 46 is disposed between each of the two adjacent layers of filtration material 44. The separator 46 is utilised to prevent collapse of the filter cell in use and provide integrity to each individual filter cell while providing relatively unimpeded fluid flow therethrough. Further, it has been observed that for "dense" filter cell cartridges when cell-to-cell spacing is minimal, the netting 42 acts as a separator between adjacent cells and therefore aids in fluid flow along the surface.

Disposed between each cell is an inter filter cell spacer 48. The spacer 48 is preferably comprised of the same material as the retainer ring assembly 32. The spacer 48 has a plurality of annular recesses 50 and ridges 51 disposed on both sides. It is preferable that at least two ridges 51 are utilised (and hence two recesses 50) to form a fluid-tight seal between adjacent filtration material disposed on adjacent filter cells. Since the netting has a plurality of apertures therethrough, it has been found that two annular ridges are usually necessary to prevent migration of unfiltered fluid along the netting 42 into the central aperture or core 31.

A plurality of bands 52 engage slots 54 in the retainer ring assembly 32 and extend from the retainer ring assembly at one end to the retainer ring assembly at the other end and are used to form a rigid filter cell assembly 20. The bands 52 are preferably of stainless steel, although any other suitable material may be utilised. Further, it is possible to utilise a plurality of threaded bolts or the like extending through the filter cell assembly and suitably attached to the retainer ring assemblies 32 in order to form a rigid assembly.

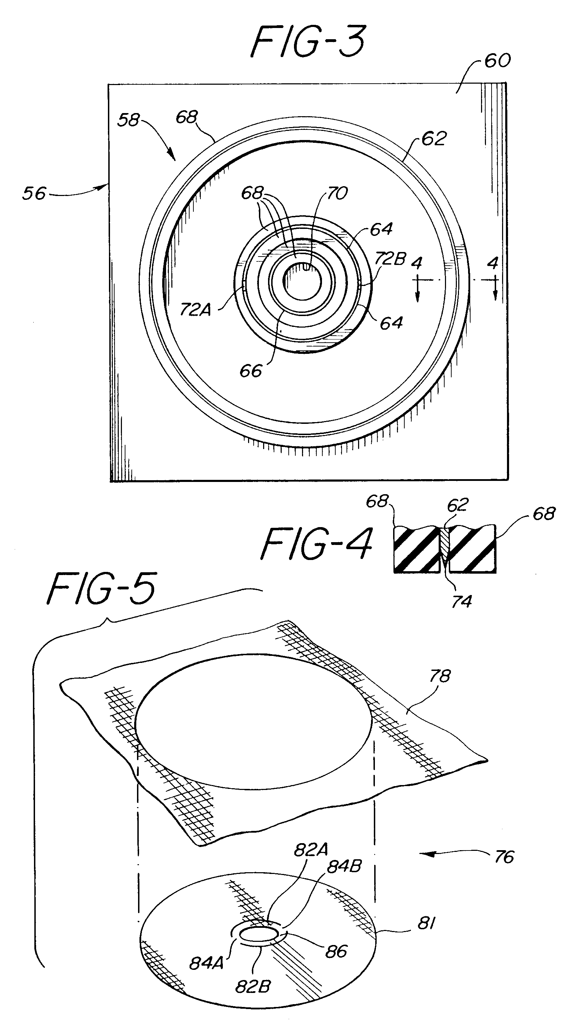

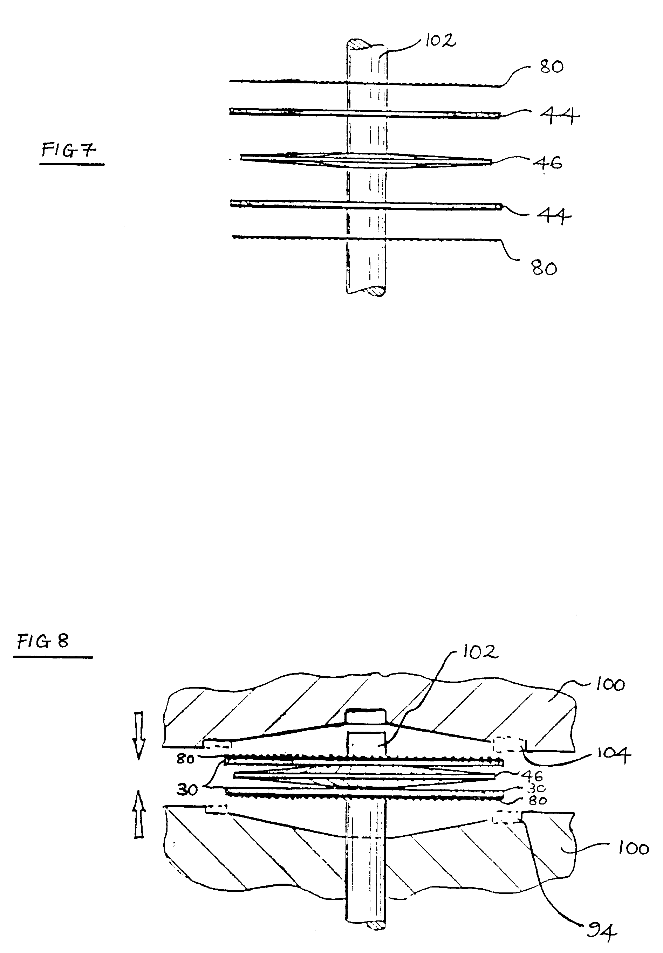

Referring now to Figure 3, there is shown a top view of a cutting die utilised in the present invention. A netting cutting die, indicated generally at 56 is utilised to cut netting 56 into the appropriate configuration. The cutting die 56 is comprised of a cutting area, shown generally at 58, disposed on a base 60. Three cutting blades are disposed on the base 60. An outer circumference cutting blade 62 is utilised to cut the outer diameter of the netting to the approximate size of the filter cell with which it is to be used. Radially inward is disposed an additional cutting blade, designated 64. Another blade is shown at 66 and is an inner circumference cutting blade. Disposed between adjacent blades are spacers 68 (shown more clearly in Figure 4) which are preferably of a sponge-type material to provide some backing to the netting during the cutting operation so that cutting is more uniform along the annular edge of the blade and to free the netting from the die after being cut. The inner circumference cutting blade has axially disposed therein a centring hole 70 which is used for alignment or registration purposes in cutting the netting. Several non-cutting portions, designated respectively as notches 72A, 72B are disposed on cutting blade 64. Each cutting blade is generally a thin sheet stock bent into an annular configuration having one end sharpened so as to form blade tip 74.

Referring to Figure 5, use of the cutting die 56 is more clearly illustrated via a representation of how the netting utilised is cut. The netting blank is larger than the required area. The netting is placed onto the cutting die 56 thereby forming the appropriate cuts resulting in a number of portions. These portions include discard material 78 and filter netting 80 which is material that is actually used with the filter cell. The cutting blade 64 results in netting flaps 82A,82B respectively, which remain attached to the netting via netting notches 84A, 84B. This therefore results in a frangible type of plug (or doughnut) 86. It has been found that it is necessary to produce the doughnut-like structure 86 in order to facilitate assembly of each filter cell. More particularly, the centre aperture is utilised to centre the netting with respect to the filtration material during the actual assembly.

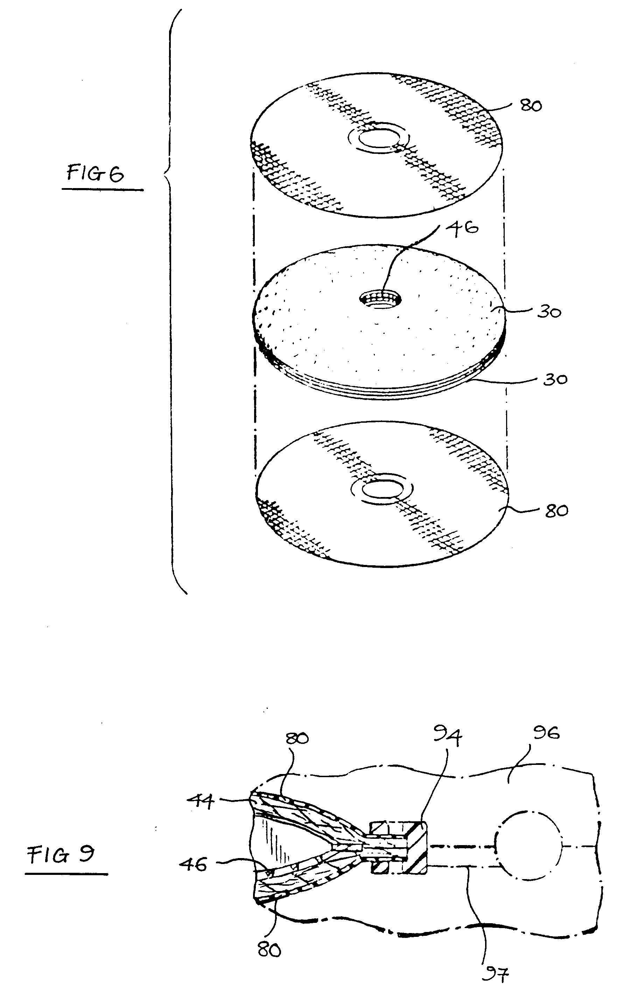

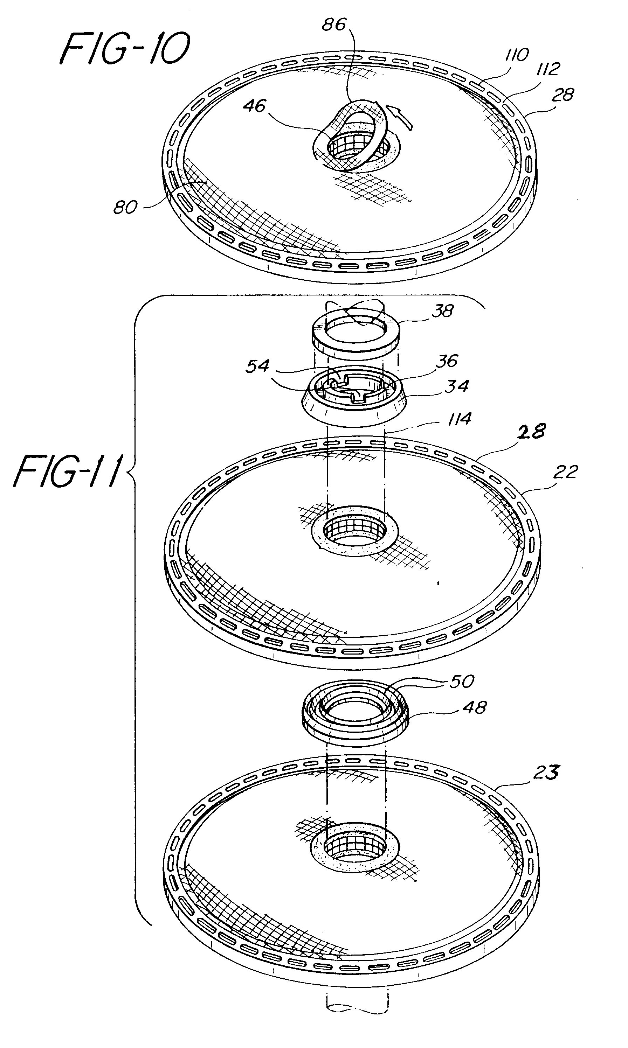

Referring to Figure 7, preliminary alignment and assembly of a filter cell is shown. More specifically, a cell assembly mandrel 102 is utilised to align the various components of a filter cell. Initially placed onto mandrel 102 is a filter material separator 46. On either side of separator 46 is the filtration material 44, followed by filter netting 80. This forms the assembly shown in Figure 6 (without the mandrel 102).

Moulding of the edge 28 on each filter cell is accomplished as shown in Figures 8 and 9. There, a cell accomplished as shown in Figures 8 and 9. There, a cell assembly press 100 disposed on mandrel 102 (or any other suitable or subsequent mandrel) and comprised of essentially two halves are axially urged along mandrel 102 towards each other until mated as shown in Figure 9. This causes the edge of netting 80 to be compressed against filtration material 44. A cavity, as part of injection mould 96 contained on cell assembly press 100, is configured so as to be in the shape of edge 28 along the annular edge of the compressed filter cell. Molten material is then injected through sprue 97 of die 96, and enters into cavity 94 so as to form edge 28. In the preferred embodiment of the present invention, the edge material is the same as retainer ring assembly 32 and inter filter cell spacer 48, although any other suitable type of material may be utilised. The press 100 remains closed until sufficient cooling of the injected material is accomplished after which time the mould is then separated and the filter cell removed from mandrel 102. The netting 80 thus becomes sealed to and/or an integral part of the edge seal 28.

Referring now to Figures 10 and 11, final construction of a filter cell assembly is shown. The moulded edge 28 has a plurality of elongate slots or apertures 110 having spacer portions 112 disposed therebetween. After the moulding process shown by Figures 8 and 9, the plug 86 is removed as shown. In order to facilitate removal of the plug 86, netting notches 84A and 84B are utilised. Therefore it is possible merely to pull on plug 86 in order to remove it from the netting 80 without performing a further cutting operation. The inner diameter of the plug 86 is only used for centring purposes about mandrel 102 during preliminary assembly steps and is removed prior to construction of the filter cell assembly 20.

Actual assembly of the filter cell assembly is accomplished by use of a filter assembly mandrel 114, which is utilised properly to align the various components in the filter cell assembly. An inter filter cell spacer 48 is placed between adjacent filter cells 22,24. On the outside of the end filter cells there is an end fitting 34 having a gasket 38 therein. Thereafter, the mandrel 114 is removed and the bands 52 are placed into slots 54, compressing the cells and components thereof thereby to form a rigid cohesive filter cell assembly structure 20 wherein retainer rings 34 and separators 48 are urged against the filter media and netting thereby to seal the central core 31.

Referring now to Figures 12 and 13, top and cross-sectional views of filter netting 80 over laid onto filtration material 44 are shown. The netting 80 may have a relatively smooth or planar undersurface to contact the filtration material 44 or may protrude into the filter media. Both types of netting minimise cracking, flaking and the like. The netting holds down the filtration material 44 to the maximum extent possible without impeding fluid flow therethrough.

Tests were conducted to compare the present invention with prior art filter cell designs. These tests produced the following results:

| Back Pressure Test | |
|---|---|
| Type of Cell | Burst Pressure (kg/cm2) |
| Standard/Prior art | 0.105 - 0.210 (1.5 - 3.0 psi) |
| Reinforced with netting | 1.125 - 1.55 (16.0 - 22.0 psi) |

Further, while a number of different types of netting were tried, type no. XN 7020 manufactured by Conwed Plastics of Minneapolis, Minnesota, was found to produce the best results. However, other types of netting produced by Conwed Plastics, such as part Nos. XN7025, XN4210, XN4700 and XN3900 are workable. The first two of these part numbers respectively performed most satisfactorily and had a strand configuration of 7 by 5 and a standard resin PP/PE blend. However, it is to be understood that other reinforced netting produced by other manufacturers is acceptable as individual circumstances dictate.

The embodiment described above may be modified without departing from the scope of the present invention. For example, the filter cells may be of different configurations, such as cylindrical, while different types of edge mechanisms may be utilised. Further, different types of material may be utilised while different methods of assembly may similarly be used.

Accordingly, a method of manufacturing is provided for assembling the improved filter cell cartridges so as to minimise leakage and produce an aesthetically improved filter cell which does not prematurely fail or aesthetically indicate failure. There is provided an inexpensive means for improving the physical and aesthetic characteristics of a filter cell by use of a netting which minimises the frequency at which the filter cell blinds or closes itself off while increasing mechanical and tensile strength as well as burst strength and the like.

## Claims

1. A method of forming a filter cell having an unfiltered fluid side and a central aperture (31) into which fluid flows through the cell from the unfiltered side, in which method two sheets of filter media (44) each having a central aperture (31) are arranged on either side of and sealed to a separator (46) disposed coaxially with said apertures (31) in the media, the separator being provided with openings to allow fluid to flow into the central aperture from between the two sheets of filter media, and there being peripheral sealing means (28) joining together the outer peripheries of the media (44), wherein the unfiltered fluid sides of the two sheets of filter media (44) are overlaid with netting means (42,80) not detrimentally affecting the flow throughput in the cell, which netting means also has central apertures which are arranged concentrically with the apertures (31) in the two sheets of filter media (44); and
the central apertures in the netting means (42,80) are enlarged by removing a ring (86) of the netting means concentric with the apertures (31) in the filter media so as thereby to expose respective sealing surfaces on the filter media, around the central apertures therein.

2. A method according to Claim 1, and comprising the additional step of forming a frangible ring (86) in the netting means concentric with the central aperture, by pre-cutting (82A,82B) the netting means (80) before the netting means is overlaid on the filter media.

3. A method as claimed in Claim 2, and comprising the step of peeling the frangible ring (86) away from the filter media after the netting means has been overlaid on the filter media (44).

4. A method as claimed in any of the preceding Claims, in which a securing member (28) is used around the periphery of the two sheets of filter media (44) to secure the netting means (42,80) in place.

5. A method as claimed in Claim 4, in which the securing member (28) is moulded in place, around the filter media (44).

6. A method as claimed in any of the preceding Claims, in which the netting means is secured to the filter medium on each of the two sheets thereof by means of a respective retaining disc (32,48) which also seals to the exposed filter media.

7. A method as claimed in any of the preceding Claims, in which the netting means (42,80) is aligned with the central aperture (31) in the filter media by placing the netting means and filter media on a common axis (102).

8. A method of assembling filter cells to form a filter cartridge, in which a plurality of cells each of which is formed by a method as claimed in any of Claims 1 to 7 is arranged co-axially, the cells being assembled with respective cell spacers (48) disposed between adjacent cells and sealing against the exposed surfaces of the filter media.

9. A method as claimed in Claim 8, in which the plurality of cells is aligned by positioning the cells in a common axis (102), alternating with respective cell spacers (48), and then a band (52) being arranged to extend within the central apertures and clamp together retaining rings (32) disposed at the ends of the cartridge.

## Patentansprüche

1. Verfahren zur Herstellung einer Filterzelle mit einer Seite für ungefiltertes Fluid und einer zentralen Öffnung (31), in die Fluid von der ungefilterten Seite durch die Zelle einfließen kann, bei welchem Verfahren zwei Schichten Filtermedien (44), die jeweils eine zentrale Öffnung (31) haben, auf beiden Seiten eines Separators (46) angeordnet werden, welcher koaxial mit den Öffnungen (31) liegt, und gegen diesen abgedichtet werden, wobei der Separator mit Öffnungen versehen ist, um zu ermöglichen, daß Fluid aus dem Zwischenraum zwischen beiden Filtermedienschichten in das Zentrum fließt, und wobei Randdichtungsmittel (28) vorhanden sind, die die Außenränder der Medien (44) miteinander verbinden, wobei die Seite des ungefilterten Fluids der beiden Filtermedienschichten (44) mit Netzeinrichtungen (42, 80) überdeckt werden, die die Durchflußrate durch die Zelle nicht nachteilig beeinflussen, wobei die Netzeinrichtungen ebenfalls zentrale Öffnungen haben, die konzentrisch mit den Öffnungen (31) in den beiden Filtermedienschichten (44) angeordnet sind; und
wobei die zentralen Öffnungen in den Netzeinrichtungen (42, 80) durch Entfernen eines Rings (86) der Netzeinrichtungen vergrößert werden, welcher Ring konzentrisch mit den Öffnungen (31) in den Filtermedien ist, um dadurch jeweils Dichtungsoberflächen auf den Filtermedien um die zentrale Öffnung freizulegen.

2. Verfahren nach Anspruch 1, welches den zusätzlichen Schritt aufweist, einen abreißbaren Ring (86) in der Netzeinrichtung konzentrisch mit der zentralen Öffnung zu bilden, indem die Netzeinrichtung (80) vorgeschnitten wird (82A, 82B) bevor die Netzeinrichtungen auf die Filtermedien aufgelegt werden.

3. Verfahren nach Anspruch 2, welches Verfahren den Schritt aufweist, den abreißbaren Ring (86) von den Filtermedien weg abzuziehen, nachdem die Netzeinrichtungen auf die Filtermedien (44) aufgelegt worden sind.

4. Verfahren nach einem der vorhergehenden Ansprüche, bei dem ein Sicherungsteil (28) um den Rand der beiden Filtermedienschichten (44) verwendet wird, um die Netzeinrichtungen (42, 80) in ihrer Position zu sichern.

5. Verfahren nach Anspruch 4, bei dem das Sicherungsteil (28) in Position, um die Filtermedien (44) herum gebildet wird.

6. Verfahren nach einem der vorhergehenden Ansprüche, bei dem die Netzeinrichtungen an dem Filtermedium auf jeder der beiden Schichten mittels jeweiliger Haltescheiben (32, 48) festgehalten werden, welche auch die freiliegenden Filtermedien abdichten.

7. Verfahren nach einem der vorhergehenden Ansprüche, bei dem die Netzeinrichtungen (42, 80) auf die zentrale Öffnung (31) in den Filtermedien ausgerichtet werden, indem die Netzeinrichtungen und die Filtermedien auf einer gemeinsamen Achse (102) plaziert werden.

8. Verfahren zum Zusammensetzen von Filterzellen zur Bildung von Filterpatronen, bei dem eine Vielzahl von Zellen, von denen jede nach einem Verfahren gemäß einem der Ansprüche 1 bis 7 gebildet ist, koaxial zueinander angeordnet werden, wobei die Zellen jeweils mit Zellen-Abstandshaltern (48) zusammengesetzt werden, die zwischen benachbarten Zellen angeordnet werden und die freiliegenden Oberflächen der Filtermedien abdichten.

9. Verfahren nach Anspruch 8, bei dem die Vielzahl von Zellen zueinander ausgerichtet wird, indem die Zellen auf einer gemeinsamen Achse (102) positioniert werden, jeweils abwechselnd mit Zellen-Abstandshaltern (48), und dann ein Band (52) so angeordnet wird, daß es durch die zentralen Öffnungen verläuft und die Halteringe (32), welche an den Enden der Patrone liegen, miteinander verspannt.

## Revendications

1. Procédé pour former une cellule filtrante ayant un côté fluide non filtré et une ouverture centrale (31) dans laquelle du fluide s'écoule à travers la cellule depuis le côté non filtré, procédé dans lequel deux feuilles de milieu filtrant (44) ayant chacune une ouverture centrale (31) sont agencées de chaque côté d'un séparateur (46) et en relation d'étanchéité avec celui-ci, le séparateur étant disposé coaxialement avec lesdites ouvertures (31) dans le milieu, le séparateur étant muni de passages pour permettre au fluide de s'écouler dans l'ouverture centrale d'entre les deux feuilles de milieu filtrant, des moyens d'étanchéité (28) périphériques étant en outre prévus pour joindre ensemble les périphéries extérieures des milieux (44), le procédé dans lequel les côtés fluides non filtrés des deux feuilles de milieu filtrant (44) sont recouverts de moyens formant filet (42, 80) n'affectant pas désavantageusement l'écoulement dans la cellule, ces moyens formant filet ayant également des ouvertures centrales qui sont agencées concentriquement avec les ouvertures (31) dans les deux feuilles de milieu filtrant (44); et
Les ouvertures centrales dans les moyens formant filet (42, 80) sont élargies en enlevant un anneau (86) des moyens formant filet concentriquement avec les ouvertures (31) dans le milieu filtrant de façon à ainsi exposer des surfaces d'étanchéité respectives sur les milieux filtrants, autour des ouvertures centrales qui les traversent.

2. Procédé selon la revendication 1, et comprenant l'étape additionnelle consistant à former un anneau frangible (86) dans les moyens formant filet concentriquement avec l'ouverture centrale, en prédécoupant (82A, 82B) les moyens formant filet (80) avant que les moyens formant filet soient placés pour recouvrir les milieux filtrants.

3. Procédé selon la revendication 2, et comprenant l'étape consistant à peler l'anneau frangible (86) pour l'écarter du milieu filtrant après que les moyens formant filet ont été placé pour recouvrir les milieux filtrants (44).

4. Procédé selon l'une quelconque des revendications précédentes, dans lequel un organe de fixation (28) est utilisé autour de la périphérie des deux feuilles de milieu filtrant (44) pour fixer en place les moyens formant filet (42, 80).

5. Procédé selon la revendication 4, dans lequel l'organe de fixation (28) est moulé en place, autour des milieux filtrants (44).

6. Procédé selon l'une quelconque des revendications précédentes, dans lequel les moyens formant filet sont fixés au milieu filtrant sur chacune des deux feuilles de celui-ci au moyen d'un disque de retenue respectif (32, 48) qui est également en relation d'étanchéité avec les milieux filtrants exposes.

7. Procédé selon l'une quelconque des revendications précédentes, dans lequel les moyens formant filet (42, 80) sont alignés avec l'ouverture centrale (31) dans les milieux filtrants en plaçant le moyen formant et les milieux filtrants sur un axe commun (102).

8. Procédé pour assembler des cellules filtrantes pour former une cartouche filtrante, dans lequel des cellules dont chacune est formée par un procédé selon l'une quelconque des revendications 1 à 7, sont arrangées coaxialement, les cellules étant assemblées avec des écarteurs de cellule respectifs (48) disposés entre cellules adjacentes et étant en contact d'étanchéité contre les surfaces exposées des milieux filtrants.

9. Procédé selon la revendication 8, dans lequel les cellules sont alignées en positionnant les cellules sur un axe commun (102), en alternance avec les écarteurs de cellule respectifs (48), puis une bande (52) étant agencée pour s'étendre dans les ouvertures centrales et serrer ensemble des anneaux de retenue (32) disposés aux extrémités de la cartouche.
